(19) Europäisches Patentamt
European Patent Office
Office européen des brevets

(11) **EP 3 359 992 B1**

(12) **EUROPEAN PATENT SPECIFICATION**

(45) Date of publication and mention
of the grant of the patent:
**12.07.2023 Bulletin 2023/28**

(21) Application number: **15823778.4**

(22) Date of filing: **10.12.2015**

(51) International Patent Classification (IPC):
***G02B 6/255*** (2006.01)

(52) Cooperative Patent Classification (CPC):
**G02B 6/255; G02B 6/2555**

(86) International application number:
**PCT/IB2015/059519**

(87) International publication number:
**WO 2017/060759 (13.04.2017 Gazette 2017/15)**

(54) **METHOD TO PRODUCE POLYMER CONVERTER FOR CONNECTING OPTICAL FIBRES**

VERFAHREN ZUR HERSTELLUNG EINES POLYMERWANDLERS ZUR VERBINDUNG VON GLASFASERN

PROCÉDÉ POUR PRODUIRE UN CONVERTISSEUR POLYMÈRE POUR RACCORDER DES FIBRES OPTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.10.2015 PL 41432815**

(43) Date of publication of application:
**15.08.2018 Bulletin 2018/33**

(73) Proprietor: **Wojskowa Akademia Techniczna im. Jaroslawa Dabrowskiego**
**00-908 Warszawa 49 (PL)**

(72) Inventors:
• **JAROSZEWICZ, Leszek R.**
**01-496 Warszawa (PL)**
• **MARC, Pawel**
**05-120 Legionowo (PL)**
• **PURA-PAWLIKOWSKA, Paulina**
**05-200 Wolomin (PL)**

(74) Representative: **JD&P Patent Attorneys**
**Joanna Dargiewicz & Partners**
**Ul. Mysliborska 93A/50**
**03-185 Warszawa (PL)**

(56) References cited:
EP-A1- 2 703 857         WO-A1-2012/010776
JP-A- H08 320 422        US-A1- 2001 038 737
US-A1- 2002 198 281      US-A1- 2003 165 297
US-A1- 2004 178 522      US-A1- 2009 196 552

**Description**

The object of the present invention is a method to produce polymer converter for connecting optical fibres.

The invention finds its application in telecommunication industry related to implementation of optical networks using fibres from silica glass and plastics, and fibre-optic sensors technology using this type of fibres.

Connecting optical fibres is a basic technological process that had to be developed in order for the fibre-optic technology to transform the picture of telecommunications in the 70s of XX c., which was then based on copper wire. Currently, the standard fibres used in telecommunications are: single mode fibres for the wavelength above 1270 nm with the core diameter of about 8 $\mu$m and cladding diameter 125 $\mu$m, and multi-mode fibres with the core diameters of 50 $\mu$m or 62.5 $\mu$m with cladding diameter of 125 $\mu$m. The technology of making fixed and detachable connections for this type of fibres is fully developed, and we can easily find devices for making this type of connections in the offer of trading companies dealing in telecommunications.

However, constant development of telecommunication technologies aimed primarily at the speed of transmission has led to the development of FFTH (Fibre To The Home) and FTTD (Fibre To The Desktop) standards. The broadband Internet access service in these standards assumes instalation of the optical fibre in the apartment or just before its door. Implementation of those solutions generates high costs, and the occuring technological problems are not easy to solve. Therefore, experts concentrated their efforts on development of a method do produce plastic fibres that can be used in short range, up to 300m, telecommunications, and the material for the fiber as well as the technological process itself reduce the costs of optical fibre production. Additionally, the main advantage of the optical fibres made of plastic over the standard fibres of silica glass is low bending loss, which enables their effective use in indoor installations with many wall corners that deteriorate the quality of the conducted optical signal in a standard single-mode or multi-mode optical fibre made of silica glass. Examples here may be GigaPOF fibre series offered by Chromis FiberOptics, Inc., made on the basis of perfluorinated PMMA (poly(methyl methacrylate), acrylic glass) that enable data transmission with the rate of 10GB/s at the wavelength of 850nm, but also effectively operating at the wavelength of 1310nm. The Company offers fibres of the following parameters: core diameter of 50 $\mu$m, 62.5 $\mu$m and 120 $\mu$m, and the jacket diameters of 490 $\mu$m and 750 $\mu$m. With regard to the above, there is a possibility to build hybrid telecommunications networks wherein it is necessary to develop a method to connect the plastic fibre with a standard multi-mode silica glass fibre, having obviously different geometrical dimensions.

The application of plastic fibres in optical fibre-optic sensors and in telecommunications requires the adaptation of that type of fibre to the standard of detachable connections used in light beam sources or measuring apparatus like spectrum analysers, optical reflectometers and/or detectors. Therefore, the execution of a fixed connection between the applied plastic fibre and the silica glass fibre equipped with a detachable connection adapted to the input or output of the device that we want to use, still remains a problem to solve.

The basic parameter describing the quality of the fibre optic connection are the losses calculated as the relation of the input optical power $P_{in}$ measured before the connection to the output optical power $P_{out}$ mesured after the light beam has passed the connection, and expressed in decibels:

$$\alpha = 10\log\left(\frac{P_{we}}{P_{wy}}\right) \qquad (1)$$

The types of fibre-optic connections has been classified according to the value of this parameter. The losses at welded fixed connection are the lowest, and their typical value ranges from 0.05 dB - 0.1 dB on connecting multi-mode fibres. For fixed mechanical connections, the typical loss level is at 0.2 dB. For detachable connections, the losses range from 0.5 - 1 dB, depending on the type of the connection and its price. Therefore, the loss parameter has been used for the evaluation of quality of the executed connection, and the information included on the Internet site of Chromis Fiberoptic, Inc. who developed the technology of execution of detachable connections for the fibres produced by them, but the loss level at such connection is about 1.5 dB, has been used as reference level for the proposed solution.

The proposed solution, belonging to the area of fixed mechanical connections, enables execution of a fixed connection with the loss below 1.0 dB on connecting the same fibres. The significant novelty of the presented solution is the possibility to execute connections between fibres of different geometry and made of different materials, e.g. silica glass fibres with plastic fibres, by means of a polymer micro-bridge created in the photopolymerisation process that functions as a mode converter for the connected fibres. The method of execution of fixed mechanical connections described and implemented so far were developed for fibres of the same geometry and made of the same materials, and were primarily intended for standard single-mode and multi-mode fibres used in telecommunications. The fibres required solely placing in precisely made fitting adapting aligning the cores of connected fibres and execution of connection and mechanical bracing.

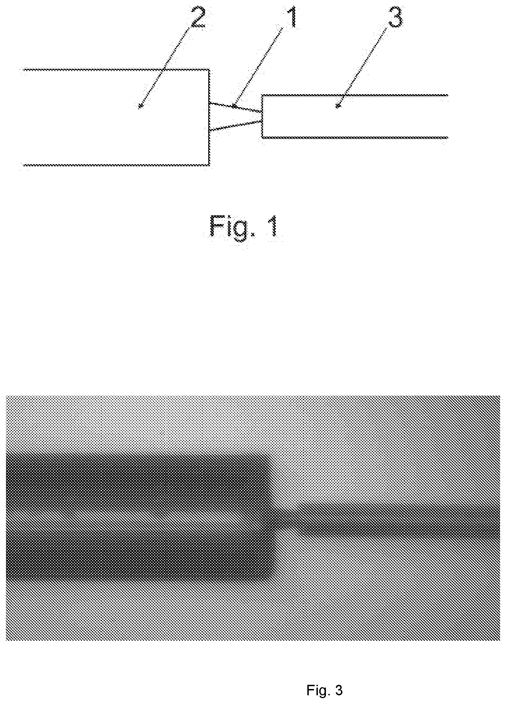

In the presented invention, a method of production and a monomer mixture is proposed, enabling the production of a polymer converter (1) illustrated in Fig. 1, being a polymer micro-bridge connecting pairs of optical fibres (2 and 3), appropriately positioned in front of each other. The connected fibres are made of different materials and can have different core geometries, numerical apertures or effective mode fields, and the task of the converter is to adapt technical parameters of the both connected fibres so that the loss on the connection is as low as possible. This element can be made by means of an easy and fast method of production polymer microstructures at the head of the optical fibre, based on free-radical photopolymerisation process.

The process was first described in 2001 in publication titled "Integratio of Micrometer-Sized Polymer Elements at the End of Optical Fibers by Free-Radical Photopolymerization," by R. Bachelot et al., published in the Applied Optics magazine. The authors demonstrated in the article that the said process can be used to create polimer micro-tips at the ends of optical fibres.

Publication "Quasi-solitonic behaviour of self-written waveguides created by photopolymerization," by Dorkenoo et al., published in Optics Letters (2001) presents the application of the photopolymerisation process to create polymer connection between a pair of optical fibres. The authors presented the possibility to create a polymer connection using this method for two identical fibres spaced 1 cm from each other. The creation of the connecting element was possible due to the so called "self driving" of the beam in the photopolymerising mixture.

The same strategy to create polymer connections was proposed in publication "Fabrication of polymer waveguides between two optical fibers using spatially controlled light-induced polymerization," by S. Jradi et al., published in Applied Optics (2008), where the possibility to create mechanically durable connections between two identical optical fibres of silica glass using the "self driving" effect was presented.

The process of creating the polymer connection between a pair of optical fibres was also described in publication "Light-Induced Self-Writing Welding of Optical Fibers," by C. Ecoffet and D.J. Lougnot, published in the Journal of Lightwave Technology (2010). The authors presented and interpretation of the process of creation of a polimer micro-bridge created from a pair of polymer microtips made of a pair of optical fibres of the same kind positioned in front of each other. The whole process was described in the publication only for identical fibres of silica glass.

In publication WO 2012/010776A1 by French company Lovalite, a mixture based on: eosin, co-initiator (MDEA - methyldiethanolamine) and multifunction monomers: pentaerythritol triacrylate (PETA) and heptafluorobutyl acrylate (HFBA) was disclosed. Following a multi-step and long procedure, the same type of fibres in two configuratios were shown. In the first option, a pair of single-mode fibres of SMF28e type by Corning were connected, and in the other multi-mode fibre pairs with core diameter of 50 were connected. In both cases, the polymer micro-bridge created between the fibres consisted of the core and the cladding. The preparatio of the core and cladding material comprised a few steps whose total time was about 15 hours, and the compositions of components making the core and the cladding, respectively, were as follows: 64.5% PETA, 31% HFBA, 4.48% MDEA and 0.02% eosin (core) and 54.5% PETA, 41% HFBA, 4.48% MDEA, and 0.02% eosin (cladding). The losses on so obtained connections were at the level of 0.01 - 0.04 dB.

The object of the present invention is a method to produce a polymer converter for connecting optical fibres according to claim 1.

Preferably, a light beam of the wavelength equal to 532 nm is used, wherein a laser or a laser diode is used as the light source.

Preferaby, disodium salt of Eosin Y is used in an amount of 0.5% by weight, methyldiethanolamine

MDEA, as co-initiator is used in an amount of 8.0% by weight, pentaerythritol triacrylate, PETA, is used in an amount of 56.5% by weight, heptafluorobutyl acrylate, HFBA, is used in an amount of 35.0% by weight

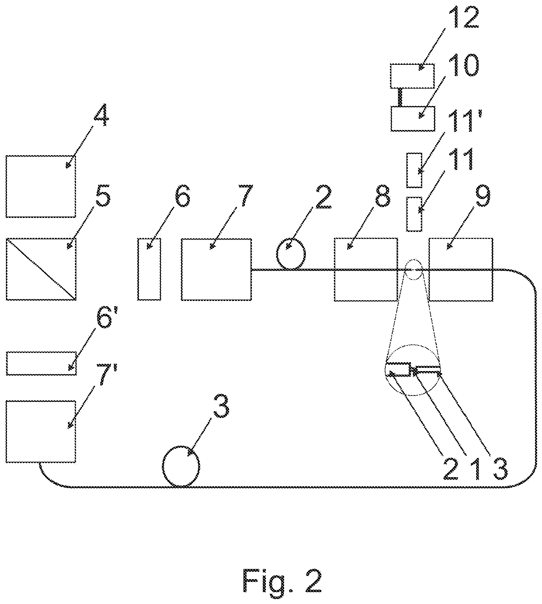

The polymer converter being the object of the present invention is obtained in a polymerisation process in the system illustrated in the drawing, wherein at least three modules have been illustrated in Fig. 2:

- the first module is the driving system. The system comprises a source of optical radiation (4), light beam splitter (5), a pair of optical attenuators (6 and 6') and two micrometric translation stages (7 and 7') to drive the light beam into the optical fibre, enabling positioning the fibres. The source (4) is a laser or a laser diode, and the length of wave generated by that element enables initialisation of the photopolymerisation process and depends on the applied mixture. The light beam splitter (5) is a non-polarizing beamsplitter cube forming two perpendicular light beams. Each of the created beams passes through the optical attenuator (6 and 6') enabling adjustment of the optical power introduced into individual optical fibres. Mechanical positioning elements (7 and 7') enable introduction of the light beam into the optical fibres (2 and 3);
- the second module is the positioning system. The system comprises a nanometric translation stage (8) with a holder for fibre 2 and a fixed holder (9) for fibre 3. The fibres are aligned in front of each other with the required precision and in the preset distance.
- the third, observation, module consists of a CCD camera (10) with a lens system (11 and 11') to visually control the alignment of the fibres and to evaluate the geometry of the created polymer bridge. The module is supplemented with a PC (12) providing observation of image from the CCD camera and the evaluation of distance between the fibres.

The method to produce the converter according to the invention consists in that a polymer micro-bridge 1 is created between two optical fibres 2 and 3 made of different materials and of different geometries, connecting their faces in the core areas. The micro-bridge is created in such a way that two fibres are aligned coaxially on the alignment module 8 and holder 9 benches, at the distance ranging from 55 - 300 $\mu$m and with the accuracy of +/- 5%, and a drop of photopolymerising substance is introduced between their end faces.

The photopolymerising substance is prepared from four components: a photosensitive dye - disodium salt of Eosin Y, co-initiator (MDEA - methyldiethanolamine) and multifunction monomers: pentaerythritol triacrylate (PETA) and heptafluorobutyl acrylate (HFBA) in the proportions indicated in the table:

| Component | Weight percent |
|---|---|
| Photosensitiser Eosin Y, disodium salt | 0.1 -1.0% |
| Co-initiator: methyldiethanolamine MDEA | 7.0 - 9.0% |
| Monomer: pentaerythritol triacrylate PETA | 45.0 - 85.0% |
| Monomer: heptafluorobutyl acrylate HFBA | 5.0 - 45.0% |

Supplementing the mixture with the last component, HFBA, is a significant modification of the monomer mixture presented in the literature before. The rated refractive index value of the PETA monomer equals 1.483, while after the polymerisation process the value increases to 1.52. In the proposed example, the connection was made between a plastic fibre made of perfluorinated PMMA, whose core refractive index equals about 1.34 and a standard multi-mode fibre of silica glass, whose refractive index value equals 1.48, thus the application of the addtional HFBA monomer, lowering the converter refractive index value. For this HFBA monomer, the refractive index equals 1.331, and 1.367 after polymerisation, which significantly influences the possibility of lowering the value of the refractive index for the created polymer converter. Taking into account the percentage composition of polymerised monomers mixture, the refractive index changes between 1.439 and 1.511. Lowering the value of this parameter influences, first of all, the reduction of losses occurring on the connection, and therefore, developing a mixture additionally containing HFBA monomer, it ispossible to optimise the connection losses.

Next, a light beam, preferably with the wavelength corresponding to the Eosin Y absorption band in the range of 450 nm - 550 nm, e.g. 532 nm, from a laser or a laser diode 4, split by the splitter 5 and illuminating optical attenuators 6 and 6' in sequence, and then optical fibres 2 and 3, is driven into optical fibres 2 and 3. The optical attenuators enable selection of the desired optical power level measured at the end of fibres 2 and 3, while the appropriate positioning of the fibres by means of translation stages guarantees driving the light into the optical fibre.

Light beams leaving fibres 2 and 3 illuminate the photopolymerising substance, wherein the photosensitive dye absorbs the laser light, initiating the polymerisation process. The process takes place during the substance exposure to light. Polymer microtips grow from the cores of both optical fibres, joining each other and creating the polymer micro-bridge 1, which is the direct effect of the light beam "self driving" phenomenon in the photopolymerising mixture.

Upon the completion of the photopolymerisation process, the polymer structure is washed with alcohol in order to remove the remaining not polymerised mixture. During the creation of the converter, the amount of the absorbed energy and the distance between the pair of connected fibres are controlled. Changing the amount of energy and the time mixture illumination, polymer bridges of various diameters can be obtained, and changing the distance between them allow to build structures up to 0.3 mm.

The object of the invention is illustrated with the following embodiments.

**Example 1**

The method to produce a polymer converter 1 according to the invention can be used for connecting a multi-mode plastic fibre GigaPOF 62SR (Chromis FiberOptics) with the core diameter of 62.5 $\mu$m and jacket diameter of 490 $\mu$m, being fibre 2, and a multi-mode silica glass fibre GIF625 (ThorLabs), being fibre 3, with the core diameter of 62.5 $\mu$m and cladding external diameter of 125 $\mu$m. The polymer converter created in the photopolymerisation prcess has the shape of a truncated cone as illustrated in Fig. 3.

The converter can be made during the photopolymerisation process in a system comprising the following modules:

- the driving module consisting of:

  • a laser 4 generating a beam with the wavelength of 532 nm, preferably with 25 mW power output, and based on Nd YAG crystal (Cobolt),

- a pair of optical attenuators 6 and 6', being broadband filters, preferably of circular shape and made of quartz glass with deposited metal layer of variable thickness, preferably ND - 100 element (ThorLabs) with standard holders,

- a light beam splitter 5 being non-polarising beamsplitter cube with splitting ratio of 50:50 and operating within the visible light spectrum, preferably element CM B013 (ThorLabs),

- micrometric translation stages for driving the light beam to optical fibres 7 and 7',

- preferably FP-1A F - 915Y elements with holders (Newport) and DIN 20 C40 lenses (Edmund Optics);

- optical fibres positioning module comprising:

- a nanometric translation stage (8) with fibre holder,

- preferably nanomax TS system (ThorLabs) with HFF001 holder (ThorLabs) and

- a fixed fibre holder 3 integrated with this element,

- preferably AM009/M and HFF001 elements (ThorLabs),

- an observation module comprising:

- a CCD camera (10), preferably DMK72AUC02 (ImagingSource) with lens 11 and 11' system, preferably with 20x magnification (Edmund Optics) for observation of fibre positioning and the created polymer bridge on computer, preferably PC, screen 12.

The method to produce polymer converter according to the present invention consists in creating a polymer converter 1 connecting the transverse surfaces of two optical fibres, GigaPOF 62SR (Chromis FiberOptics) polymer fibre 2 and standard GIF625 (ThorLabs) multi-mode fibre 3 of silica glass. The said element is created in such a way that two fibres 2 and 3 are aligned coaxially on the alignment module 8 and 9 stages, at the distance of 60 $\mu$m, and a drop of photopolymerising substance is introduced between their end faces.

The photopolymerising substance is prepared from four components: a photosensitive dye - disodium salt of Eosin Y, co-initiator (MDEA - methyldiethanolamine) and multifunction monomers: pentaerythritol triacrylate (PETA) and heptafluorobutyl acrylate (HFBA) in the proportions indicated in the table.

| Component | Weight percent |
|---|---|
| Photosensitiser Eosin Y, disodium salt | 0.5 % |
| Co-initiator: methyldiethanolamine MDEA | 8.0 % |
| Monomer: pentaerythritol triacrylate PETA | 56.5 % |
| Monomer: heptafluorobutyl acrylate HFBA | 35.0 % |

The refractive index for such prepared mixture equals 1.463.

Next, as illustrated on the diagram in Fig. 2, a light beam whose power is adjusted by optical attenuators 6 and 6', that is divided by the beamsplitter 5, is introduced into the optical fibres from green light laser 4 of the wavelength equal to 532 nm.

The photopolymerising substance, wherein the photosensitive dye absorbs the laser 4 light, initiating the polymerisation process is illuminated through fibres 2 and 3. The photopolymerisation process takes place during the exposure of the mixture to the light, and polymer microtips of different diameters grow from the cores of both optical fibres and create micro-bridge 1 between the optical fibres by joining each other, which is the direct effect of the light beam self-driving in the photopolymerising mixture.

Upon the completion of the photopolymerisation process, the polymer structure is washed with alcohol in order to remove the remaining not polymerised mixture. Concurrently, the amount of the absorbed energy and the distance between the pair of connected fibres are controlled.

The losses measured on connection of this pair of fibres, only on moving and aligning the fibres, equaled 0.55 dB, and were deemed to be the reference loss level. After the creation of the converter, the losses did not exceed 0.15 dB, thus significantly lower loss level was achieved than for commercial mechanical splicing.

**Example 2**

The method to produce a polymer converter 1 according to the invention can be used for connecting a multi-mode plastic fibre GigaPOF 62SR (Chromis FiberOptics) with the core diameter of 62.5 $\mu$m and jacket diameter of 490 $\mu$m, being fibre 2, and a multi-mode silica glass fibre GIF50C (ThorLabs), being fibre 3, with the core diameter of 50 $\mu$m and cladding external diameter of 125 $\mu$m. The polymer converter created during the photopolymerisation process has the shape of a truncated cone, which is illustrated in Fig. 3.

The converter can be made during the photopolymerisation process in a system comprising the following modules:

- the driving module consisting of:

  • a laser 4 generating a beam with the wavelength of 532 nm, preferably with 25 mW power output, and based on Nd YAG crystal (Cobolt),

  • a pair of optical attenuators 6 and 6', being broadband filters, preferably of circular shape and made of quartz glass with deposited metal layer of variable thickness of preferably ND - 100 element (ThorLabs) with standard fittings,

  • a light beam splitter 5 being non-polarising beamsplitter cube with splitting ratio of 50:50 and operating within the visible light spectrum, preferably element CM B013 (ThorLabs),

  • micrometric translation stages for driving the light beam to optical fibres 7 and 7',

  • preferably FP-1A F - 915Y elements with holders (Newport) and DIN 20 C40 lenses (Edmund Optics);

- optical fibres positioning module, comprising:

  • a nanometric translation stage (8) with fibre holder,

  • preferably nanomax TS system (ThorLabs) with HFF001 holder (ThorLabs) and

  • a fixed fibre holder 3 integrated with this element,

  • preferably AM009/M and HFF001 elements (ThorLabs),

- an observation module comprising:

  • a CCD camera 10, preferably DMK72AUC02 (ImagingSource) with lens 11 and 11' system, preferably with magnification of 20 (Edmund Optics) for observation of fibre positioning and the created polymer bridge on computer, preferably PC, screen 12.

The method to produce a polymer converter according to the present invention consists in creating a polymer converter 1 connecting the transverse surfaces of two optical fibres, GigaPOF 62SR (Chromis FiberOptics) polymer fibre 2 and a standard GIF50C (ThorLabs) multi-mode fibre 3 of silica glass, paired with each other. The said element is created in such a way that two fibres are aligned coaxially on the alignment module, 8 and 9, stages, at the distance of 60 $\mu$m, and a drop of photopolymerising substance is introduced between their end faces.

The photopolymerising substance is prepared from four components: a photosensitive dye - disodium salt of Eosin Y, co-initiator (MDEA - methyldiethanolamine) and monomers: pentaerythritol triacrylate (PETA) and heptafluorobutyl acrylate (HFBA) in the proportions indicated in the table.

| Component | Weight percent |
|---|---|
| Photosensitiser Eosin Y, disodium salt | 0.5 % |
| Co-initiator: methyldiethanolamine MDEA | 8.0 % |
| Monomer: pentaerythritol triacrylate PETA | 56.5 % |
| Monomer: heptafluorobutyl acrylate HFBA | 35.0 % |

The refractive index for such prepared mixture equals 1.463.

Next, as illustrated on the diagram in Fig. 2, a light beam whose power is adjusted by optical attenuators 6 and 6', and that is divided by the beamsplitter 5, is introduced into the optical fibres from green light laser 4 of the wavelength equal to 532 nm.

The photopolymerising substance, wherein the photosensitive dye absorbs the laser 4 light, initiating the polymerisation process is illuminated through fibres 2 and 3. The photopolymerisation process takes place during the exposure of the mixture to the light, and polymer microtips of different diameters grow from the cores of both optical fibres and create micro-bridge 1 between the optical fibres by joining each other, which is the direct effect of the light beam self-driving in the photopolymerising mixture.

Upon the completion of the photopolymerisation process, the polymer structure is washed with alcohol in order to remove the remaining not polymerised mixture. Concurrently, the amount of the absorbed energy and the distance between the pair of connected fibres are controlled.

The loss levels on the connection point of that pair of fibres have not yet been measured, and the data shall be provided after the optimization of the connections.

**Example 3**

The method to produce a polymer converter 1 according to the invention can be used for connecting a multi-mode plastic fibre GigaPOF 50SR (Chromis FiberOptics) with the core diameter of 50 $\mu$m and jacket diameter of 490 $\mu$m, being fibre 2, and a multi-mode silica glass fibre GIF50C (ThorLabs), being fibre 3, with the core diameter of 50 $\mu$m and cladding external diameter of 125 $\mu$m. The polymer converter created in the photopolymerisation process has the shape of a truncated cone, as illustrated in Fig. 3.

The converter can be made during the photopolymerisation process in a system comprising the following modules:

- the driving module consisting of:

    • laser 4 generating a beam with the wavelength of 532 nm, preferably with 25 mW power, and made on the basis of ND YAG (Cobolt) crystal, a pair of optical attenuators 6 and 6', being broadband filters, preferably made in the form of circles of quartz glass with deposited metal layer of variable thickness, preferably an ND - 100 element (ThorLabs) including standard holders,

    • a light beam splitter 5 being a non-polarising beamsplitter cube with splitting ratio of 50:50 and operating within the visible light spectrum,

    • preferably element CM B013 (ThorLabs),

    • micrometric translation stages for driving the light beam to optical fibres 7 and 7',

    • preferably of FP-1A F - 915Y elements with holders (Newport) and DIN 20 C40 lenses (Edmund Optics);

- optical fibres positioning module, comprising:

    • a nanometric translation stage (8) with fibre holder,

    • preferably nanomax TS system (ThorLabs) with HFF001 holder (ThorLabs) and

    • a fixed fibre holder 3 integrated with this element,

- preferably AM009/M and HFF001 elements (ThorLabs),

- an observation module comprising:

  - a CCD camera 10, preferably DMK72AUC02 (ImagingSource) with lens 11 and 11' system, preferably with magnification of 20 times (Edmund Optics) for observation of fibre positioning and the created polymer bridge on computer, preferably PC, screen 12.

The method to produce a polymer converter according to the present invention consists in creating a polymer converter 1 connecting the transverse surfaces of two optical fibres, GigaPOF 50SR (Chromis FiberOptics) polymer fibre 2 and a standard GIF50C (ThorLabs) multi-mode fibre 3 of silica glass, paired with each other. The said element is created in such a way that two fibres are aligned coaxially on the alignment module, 8 and 9, stages, at the distance of about 60 μm, and a drop of photopolymerising substance is introduced between their end faces.

The photopolymerising substance is prepared from four components: a photosensitive dye - disodium salt of Eosin Y, co-initiator (MDEA - methyldiethanolamine) and monomers: pentaerythritol triacrylate (PETA) and heptafluorobutyl acrylate (HFBA) in the proportions indicated in the table.

| Component | Weight percent |
|---|---|
| Photosensitiser Eosin Y, disodium salt | 0.5 % |
| Co-initiator: methyldiethanolamine MDEA | 8.0 % |
| Monomer: pentaerythritol triacrylate PETA | 56.5 % |
| Monomer: heptafluorobutyl acrylate HFBA | 35.0 % |

The refractive index for such prepared mixture equals 1.463.

Next, as illustrated on the diagram in Fig. 2, a light beam whose power is adjusted by optical attenuators 6 and 6', and that is divided by the beamsplitter 5, is introduced into the optical fibres from green light laser 4 of the wavelength equal to 532 nm.

The photopolymerising substance, wherein the photosensitive dye absorbs the laser 4 light, initiating the polymerisation process is illuminated through fibres 2 and 3. The photopolymerisation process takes place during the exposure of the mixture to the light, and polymer microtips of different diameters grow from the cores of both optical fibres and create micro-bridge 1 between the optical fibres by joining each other, which is the direct effect of the light beam self-driving in the photopolymerising mixture.

Upon the completion of the photopolymerisation process, the polymer structure is washed with alcohol in order to remove the remaining not polymerised mixture. Concurrently, the amount of the absorbed energy and the distance between the pair of connected fibres are controlled.

The loss levels on the connection point of that pair of fibres have not yet been measured, and the data shall be provided after the optimization of the connections.

**Example 4**

The method to produce a polymer converter 1 according to the invention can be used for connecting a multi-mode plastic fibre GigaPOF 120SR (Chromis Fiberoptics) with the core diameter of 120 μm and jacket diameter of 490 μm, being fibre 2, and a multi-mode silica glass fibre GIF625 (ThorLabs), being fibre 3, with the core diameter of 62.5 μm and cladding external diameter of 125 μm. The polymer converter created during the photopolymerisation process has the shape of a truncated cone, which is illustrated in Fig. 3.

The converter can be made during the photopolymerisation process in a system comprising the following modules:

- the driving module consisting of:

  - a laser 4 generating a beam with the wavelength of 532 nm, preferably with 25 mW power output, and based on Nd YAG crystal (Cobolt),

  - a pair of optical attenuators 6 and 6', being broadband filters, preferably of circular shape and made of quartz glass with deposited metal layer of variable thickness of preferably ND - 100 element (ThorLabs) with standard fittings,

- a light beam splitter 5 being non-polarising beamsplitter cube with splitting ratio of 50:50 and operating within the visible light spectrum, preferably element CM B013 (ThorLabs),

- micrometric translation stages for driving the light beam to optical fibres 7 and 7',

- preferably FP-1A F - 915Y elements with holders (Newport) and DIN 20 C40 lenses (Edmund Optics);

- optical fibres positioning module, comprising:

  - a nanometric translation stage (8) with fibre holder,

  - preferably nanomax TS system (ThorLabs) with HFF001 holder (ThorLabs) and

  - a fixed fibre holder 3 integrated with this element,

  - preferably AM009/M and HFF001 elements (ThorLabs),

- an observation module comprising:

  - a CCD camera 10, preferably DMK72AUC02 (ImagingSource) with lens 11 and 11' system, preferably with magnification of 20 (Edmund Optics) for observation of fibre positioning and the created polymer bridge on computer, preferably PC, screen 12.

The method to produce a polymer converter according to the present invention consists in creating a polymer converter 1 connecting the transverse surfaces of two optical fibres, GigaPOF 120SR (Chromis FiberOptics) polymer fibre 2 and a standard GIF625 (ThorLabs) multi-mode fibre 3 of silica glass, paired with each other. The said element is created in such a way that two fibres 2 and 3 are aligned coaxially on the alignment module 8 and 9 stages, at the distance of about 60 $\mu$m, and a drop of photopolymerising substance is introduced between their end faces.

The photopolymerising substance is prepared from four components: a photosensitive dye - disodium salt of Eosin Y, co-initiator (MDEA - methyldiethanolamine) and monomers: pentaerythritol triacrylate (PETA) and heptafluorobutyl acrylate (HFBA) in the proportions indicated in the table.

| Component | Weight percent |
|---|---|
| Photosensitiser Eosin Y, disodium salt | 0.5 % |
| Co-initiator: methyldiethanolamine MDEA | 8.0 % |
| Monomer: pentaerythritol triacrylate PETA | 56.5 % |
| Monomer: heptafluorobutyl acrylate HFBA | 35.0 % |

The refractive index for such prepared mixture equals 1.463.

Next, as illustrated on the diagram in Fig. 2, a light beam whose power is adjusted by optical attenuators 6 and 6', and that is divided by the beamsplitter 5, is introduced into the optical fibres from green light laser 4 of the wavelength equal to 532 nm.

The photopolymerising substance, wherein the photosensitive dye absorbs the laser 4 light, initiating the polymerisation process is illuminated through fibres 2 and 3. The photopolymerisation process takes place during the exposure of the mixture to the light, and polymer microtips of different diameters grow from the cores of both optical fibres and create micro-bridge 1 between the optical fibres by joining each other, which is the direct effect of the light beam self-driving in the photopolymerising mixture.

Upon the completion of the photopolymerisation process, the polymer structure is washed with alcohol in order to remove the remaining not polymerised mixture. Concurrently, the amount of the absorbed energy and the distance between the pair of connected fibres are controlled.

The loss levels on the connection point of that pair of fibres have not yet been measured, and the data shall be provided after the optimization of the connections.

**Legend:**

1 - polymer converter,
2 - the first fibre,
3 - the second fibre,
4 - laser generating the light beam of the wavelength of 532 nm,
5 - light beam splitter with splitting ratio of 50:50,
6 and 6' - optical attenuators,
7 and 7' - micrometric translation stages for driving the beam into the optical fibres,
8 - nanometric translation stage with fibre 2 holder,
9 - fixed fibre 3 holder,
10 - CCD camera,
11 and 11' - lens system,
12 - PC class computer.

**Claims**

**1.** A method to produce a polymer converter (1) for connecting optical fibres (2, 3) made of different materials, comprising:

- positioning both optical fibres coaxially in front of each other in a positioning system;
- introduction of a photopolymerising substance consisting of disodium salt of Eosin Y, methyldiethanolamine, MDEA, as co-initiator and multifunction monomers: pentaerythritol triacrylate, PETA, and heptafluorobutyl acrylate, HFBA, between their end faces;
- introduction of a light beam of predetermined power from a light source into the optical fibres;
- illuminating with light beams leaving the optical fibres the photopolymerising substance resulting in growing polymer microtips from the cores of both optical fibers, joining each other and creating a polymer micro-bridge;
- controlling the micro-bridge growth and controlling the amount of absorbed energy and the distance between the pair of fibres,
wherein - disodium salt of Eosin Y is used in an amount of 0.1 - 1.0% by weight,
- methyldiethanolamine, MDEA, as co-initiator is used in an amount of 7.0 - 9.0% by weight
- pentaerythritol triacrylate, PETA, is used in an amount of 45.0 - 85.0% by weight, and
- heptafluorobutyl acrylate, HFBA, is used in an amount of 5.0 - 45.0% by weight.

**2.** The method of claim 1, **characterized in that** a light beam of the wavelength equal to 532 nm is used, wherein a laser or a laser diode is used as the light source (4).

**3.** The method of claim 1, **characterized in that**

- disodium salt of Eosin Y is used in an amount of 0.5% by weight
- methyldiethanolamine, MDEA, as co-initiator is used in an amount of 8.0% by weight
- pentaerythritol triacrylate, PETA, is used in an amount of 56.5% by weight
- heptafluorobutyl acrylate, HFBA, is used in an amount of 35.0% by weight

**Patentansprüche**

**1.** Verfahren zur Herstellung eines Polymerwandlers (1) zum Verbinden von optischen Fasern (2, 3) aus verschiedenen Materialien, das Folgendes umfasst:

- das Positionieren von beiden optischen Fasern koaxial voreinander in einem Positionierungssystem;
- das Einführen einer photopolymerisierenden Substanz, die aus dem Dinatriumsalz von Eosin Y, Methyldiethanolamin, MDEA, als Coinitiator und den Multifunktionsmonomeren Pentaerythrittriacrylat, PETA, und Heptafluorbutylacrylat, HFBA, besteht, zwischen ihre Stirnflächen;
- das Einführen eines Lichtstrahls mit vorbestimmter Leistung aus einer Lichtquelle in die optischen Fasern;

- das Beleuchten der photopolymerisierenden Substanz mit aus den optischen Fasern austretenden Lichtstrahlen, was ein Wachsen von Polymer-Mikrospitzen von den Kernen der beiden optischen Fasern, die sich miteinander verbinden und eine Polymer-Mikrobrücke bilden, zur Folge hat;
- das Kontrollieren des Wachstums der Mikrobrücke und das Kontrollieren der Menge der absorbierten Energie und des Abstands zwischen dem Paar von Fasern,
wobei
- das Dinatriumsalz von Eosin Y in einer Menge von 0,1 - 1,0 Gew.-% verwendet wird,
- Methyldiethanolamin, MDEA, als Coinitiator in einer Menge von 7,0 - 9,0 Gew.-% verwendet wird,
- Pentaerythrittriacrylat, PETA, in einer Menge von 45,0 - 85,0 Gew.-% verwendet wird, und
- Heptafluorbutylacrylat, HFBA, in einer Menge von 5,0 - 45,0 Gew.-% verwendet wird.

2. Verfahren nach Anspruch 1, **dadurch gekennzeichnet, dass** ein Lichtstrahl der Wellenlänge gleich 532 nm verwendet wird, wobei ein Laser oder eine Laserdiode als Lichtquelle (4) verwendet wird.

3. Verfahren nach Anspruch 1, **dadurch gekennzeichnet, dass**

- das Dinatriumsalz von Eosin Y in einer Menge von 0,5 Gew.-% verwendet wird,
- Methyldiethanolamin, MDEA, als Coinitiator in einer Menge von 8,0 Gew.-% verwendet wird,
- Pentaerythrittriacrylat, PETA, in einer Menge von 56,5 Gew.-% verwendet wird,
- Heptafluorbutylacrylat, HFBA, in einer Menge von 35,0 Gew.-% verwendet wird.

**Revendications**

1. Méthode de production d'un convertisseur polymère (1) pour connecter des fibres optiques (2, 3) constituées de différents matériaux, comprenant :

- positionnement des deux fibres optiques coaxialement l'une devant l'autre dans un système de positionnement ;
- introduction d'une substance photopolymérisante constituée de sel disodique d'Eosine Y, méthyldiéthanolamine, MDEA, en tant que co-initiateur et monomères multifonctions : triacrylate de pentaérythritol, PETA, et acrylate d'heptafluorobutyle, HFBA, entre leurs faces terminales ;
- introduction d'un faisceau lumineux de puissance prédéterminée à partir d'une source lumineuse dans les fibres optiques ;
- éclairage avec des faisceaux lumineux sortant des fibres optiques de la substance photopolymérisante entraînant la croissance de micropointes polymères à partir des coeurs des deux fibres optiques, leur jonction et la création d'un micro-pont polymère ;
- contrôle de la croissance du micro-pont et contrôle de la quantité d'énergie absorbée et de la distance entre la paire de fibres,
dans laquelle - le sel disodique d'Eosine Y est utilisé en une quantité de 0,1 à 1,0 % en poids,
- la méthyldiéthanolamine, MDEA, en tant que co-initiateur est utilisée en une quantité de 7,0 à 9,0 % en poids,
- le triacrylate de pentaérythritol, PETA, est utilisé en une quantité de 45,0 à 85,0 % en poids, et
- l'acrylate d'heptafluorobutyle, HFBA, est utilisé en une quantité de 5,0 à 45,0 % en poids.

2. Méthode selon la revendication 1, **caractérisée en ce qu'**est utilisé un faisceau lumineux d'une longueur d'onde égale à 532 nm, un laser ou une diode laser étant utilisé comme source lumineuse (4).

3. Méthode selon la revendication 1, **caractérisée en ce que**

- le sel disodique d'Eosine Y est utilisé à raison de 0,5 % en poids,
- la méthyldiéthanolamine, MDEA, en tant que co-initiateur est utilisée à raison de 8,0 % en poids,
- le triacrylate de pentaérythritol, PETA, est utilisé à raison de 56,5 % en poids,
- l'acrylate d'heptafluorobutyle, HFBA, est utilisé à raison de 35,0 % en poids.

Fig. 1

Fig. 3

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012010776 A1

### Non-patent literature cited in the description

- **R. BACHELOT et al.** Integratio of Micrometer-Sized Polymer Elements at the End of Optical Fibers by Free-Radical Photopolymerization. *Applied Optics magazine,* 2001
- **DORKENOO et al.** Quasi-solitonic behaviour of self-written waveguides created by photopolymerization. *Optics Letters,* 2001
- **S. JRADI et al.** Fabrication of polymer waveguides between two optical fibers using spatially controlled light-induced polymerization. *Applied Optics,* 2008
- **C. ECOFFET ; D.J. LOUGNOT.** Light-Induced Self-Writing Welding of Optical Fibers. *Journal of Lightwave Technology,* 2010